# EUROPEAN PATENT APPLICATION

(11) **EP 3 581 608 A1**
(43) Date of publication of application: **18.12.2019**
(21) Application number: 18020255.8
(22) Date of filing: 14.06.2018
(51) Int. Cl.: C08J 5/18, C08J 9/00, C08J 9/12, D01D 5/247, D01F 6/92

(54) **POLYMERIC PRODUCTS**

(71) Applicant: Stichting Wageningen Research, 6708 PB Wageningen (NL)
(72) Inventor: Schennink, Geraldus Gerardus Johannes, 7031 EB Wehl (NL); Knoop, Johannes Rutger Idsard, 3962 DE Wijk bij Duurstede (NL); Alvarado, Chacon Fresia Maria, 3544 DH Utrecht (NL)
(74) Representative: V.O.

(57) **Abstract**

The invention is directed to a polymeric product based on a resin composition that comprises a high melting point (Tₘ) semicrystalline polymer phase and a low melting point (Tₘ) semicrystalline polymer phase, wherein the high Tₘ and low Tₘ semicrystalline polymer phases comprise polymers based on the same monomers and/or isomers thereof, and wherein the high Tₘ semicrystalline polymer phase has a higher melting point than the melting point of the low Tₘ semicrystalline polymer phase. In a further aspect, the invention is directed a method for the production of the foam, wherein said method comprises processing the resin composition at a temperature between the melting point of the low Tₘ semicrystalline polymer phase and the melting point of the high Tₘ semicrystalline polymer phase.

## Description

The invention is in the field of polymeric products such as foams, sheet, film, fibers and the like. In particular, the invention is directed to polymeric foams that are based on biopolymers and have a low open-cell content. The invention is further directed to a method for preparing said polymer products.

Polymeric products are product based on polymers. Accordingly, polymeric foams are foams based on polymeric materials, typically on synthetic polymeric materials. Polymeric products such as foams find several applications as engineering materials. For certain applications, foams, films or sheets can for instance be used in insulation, packaging and structural applications. For these applications, polymeric foams preferably have a low open-cell content. In contrast to open-cell-structured foams, closed-cell-structures foams do not, or only to a limited extent, contain interconnected pores. As such, the closed-cell foams have higher thermal insulation and mechanical properties such as compressive strengths.

In general low open-cell contents can only be produced from materials which possesses a specific combination of various rheological properties (especially melt strength) in combination with suitable processing conditions. Polymeric foams are based on a resin composition and the resin that is to be foamed must have a specific shear viscosity in combination with a minimal melt strength such that it can be expanded by a blowing agent. However, it must also be able to retain the blowing agent and possesses a minimum strain hardening property such that the blown resin does not collapse during the growth of a foam bubble.

Rheological properties such as melt strength not only play a role in foaming to obtain foams. Melt strength is typically also a relevant parameter for other resin (melt) processing or shaping methods where stretching processes play an important role such as film extrusion (e.g. film blowing, film casting), fiber spinning, blow molding, injection stretch blow molding, roto molding, 3D-printing techniques, particle foaming, thermoforming and the like.

The melt processing such as foaming of resins, in particular resins based on bio-based polymers such as poly(lactic acid) (PLA), has proven to be challenging due to the intrinsic rheological properties of PLA. However, due to the favorable biodegradability and sustainability properties of bio-based polymers, it is desired to provide closed-cell foams based on these biopolymers.

Attempts for the production of PLA-based foams are for instance described in US2008/0262118. The described foams are based on amorphous PLA and a drawback of this specific family of PLA-based foams is that these foams are not dimensionally stable above 60 °C (*i*.*e*. above the glass transition temperature of PLA). A wider range of maximum usage temperatures is required for a lot of applications.

Alternative efforts, as for instance described in WO2008/09888, have been made by providing foams that are based on a blend of PLA with additives such as aliphatic or aromatic polyesters and/or with chain extenders or branching agents like styrene-acrylic multifunctional oligomeric agents, available under the tradename Joncryl (more specifically grade Joncryl 4368 C). Such additives typically negatively influence the favorable properties of PLA-based foams such as limitations on food contact approvals. Moreover addition of these type of additives result in very high shear viscosities. It is preferred that the presence of such additives is kept to a minimal and that the PLA-based foams are mainly, more preferably essentially entirely based on PLA. Other examples of chain extenders or branching agents include peroxides, carbodiimides and various types of bisoxazolines.

The present inventors have surprisingly found that the melt processability properties such as foamability properties of resins and/or the properties of the products such as foams based on these resins comprising polymers can be improved by the presence of a crystalline part that is still present at the foaming temperatures. It was found that by using this combination of polymer states, melt strength of the resin is improved. This may for instance advantageously be used to provide a polymeric foam that has an open-cell content of less than 80% or even lower, such as 50% or less can be obtained.

Accordingly, the present invention is directed to a polymeric product such as a foam, film, sheet or fiber, that is based on a resin composition that comprises at least two phases of polymers that are based on the same monomers and/or isomers thereof. Of these phases, one phase has a higher melting point than another phase. Typically, both polymer phases in the resin composition have at room temperature a semi-crystalline state. Without wishing to be bound by theory, the present inventors believe that the favorable melt processing properties, in particular the foaming properties of the resin and the low open-cell content of the foam is the result of the presence of specific crystalline states of the polymer phases in the resin composition and the difference in melting points between the phases.

In particular, the invention is directed to a polymeric product such as a foam, film, sheet or fiber, preferably a polymeric foam, that is based on a resin composition that comprises a high melting point (Tₘ) semicrystalline polymer phase and a low melting point (Tₘ) semicrystalline polymer phase, wherein the high Tₘ and low Tₘ semicrystalline polymer phases comprises polymers based on the same monomers and/or isomers thereof, and wherein the high Tₘ semicrystalline polymer phase has a higher melting point than the melting point of the low Tₘ semicrystalline polymer phase. It is believed that the difference between the melting points of the high Tm semicrystalline polymer phase and low Tm semicrystalline polymer phase enable the foaming of the resin at a temperature at which the low Tₘ semicrystalline polymer phase is melted while the high Tₘ semicrystalline polymer phase is still semicrystalline, or at least still provided in structure to the molten low Tₘ semicrystalline polymer phase thereby providing the observed favorable melt processing properties and the favorable foaming.

The difference in melting points between the semicrystalline polymer phases is typically at least partially due to a difference in the degree of crystallinity and/or type of crystals between the phases. Generally, both polymers phases can be considered semicrystalline, i.e. having a degree of crystallinity between 0% (*i*.*e*. fully amorphous) and 100% (*i*.*e*. fully crystalline). In practice, a crystallinity of 100% can not be achieved since even the etches of a perfect one-crystal do not have the same crystallinity as the bulk of the perfect one-crystal. In addition, between polymer crystals in a polymer phase having a high degree of crystallinity, generally some amorphous polymer substance is located. Accordingly, the term semicrystalline is used in the context of the present invention.

Generally, the melting point of semicrystalline phases can routinely be determined by differential scanning calorimetry (DSC) according to ISO 11357-3. However, the degree of the crystallinity of the low Tₘ semicrystalline polymer phase may be very low, *e.g.* 2 to 3% or less. Accordingly, in particular cases the melting point of the low Tₘ semicrystalline polymer phase may be difficult to be determined or can not be determined. In such cases, in the context of the present invention, the melting point of the high Tₘ semicrystalline polymer phase is considered to be higher than the melting point of the low Tₘ semicrystalline polymer phase.

For the favorable resin processing properties, in particular in order to foam at a temperature between the melting points of the high Tₘ and low Tₘ semicrystalline polymer phase, it is preferred that there is sufficient difference between said melting points, in particular if the melting of the phases proceeds through a melting range. Accordingly, it is preferred that the melting point of high Tₘ semicrystalline polymer phase is more than 10 °C, preferably more than 25 °C, more preferably more than 40 °C higher than the melting point of low Tₘ semicrystalline polymer phase as determined by differential scanning calorimetry according to ISO 11357-3.

The semicrystalline polymer phases in accordance with the present invention comprise or essentially consist of the same type of polymers, meaning that the polymers which form the high Tₘ semicrystalline polymer phase are built from or based on the same monomers and/or isomers thereof as the polymers which form the low Tₘ semicrystalline polymer phase. With isomer of a monomer is meant a molecule with the same molecular formula as the monomer but with a different chemical structure. Thus an isomer of a monomer consists of the same number of atoms of each element, but with a different arrangement or orientation of their atoms. The isomers can comprise stereoisomers such as enantiomers, diastereoisomers and cis/trans-isomers (sometimes also referred to as E/Z-isomers), as well as structural isomers that have the same molecular formula but different bonding patterns and atomic organization. It is preferred that the high and low Tₘ semicrystalline polymer phases essentially consist of polymers based on the same monomers and/or stereoisomers thereof. By using different isomers of a particular monomer, the melting point of the polymers concerned can be influenced.

Due to their higher melting point, high Tₘ semicrystalline polymer phase can be regarded as being more crystalline, comprising more perfect crystals, and/or comprising other crystal types than the low Tₘ semicrystalline polymer phase. However, it may be appreciated that low Tₘ semicrystalline polymer phase as such may also be considered to have crystalline properties, as long as the melting point is lower than that of high Tₘ semicrystalline polymer phase. Examples of suitable combinations of various polymers include the combination of syndiotactic polypropylene (st-(poly)propylene) (having a melting point of 125-131 °C) and isotactic polypropylene (having a melting point of 160-170 °C), as well as the combination of polylactic acid based on 95 mol% L-lactic acid and 5 mol% D-lactic acid (having a melting point of about 130 °C) and polylactic acid based on at least 99 mol% L-lactic acid and less than 1 mol% D-lactic acid (having a melting point of about 180 °C). The melting point of semicrystalline polymer phases of the same type can routinely be determined by differential scanning calorimetry (DSC) according to ISO 11357-3.

In a particular embodiment of the present invention, the high Tₘ semicrystalline polymer phase comprise a set of polymers that are capable of forming a stereocomplex. Preferably, said set of polymers is present in the polymeric product as a stereocomplex meaning that the first and the second polymer are at least partially present in the product as a stereocomplex.

Stereocomplex formation of polymers is a physical phenomenon wherein two complementary polymers stoichiometrically interact at the level of monomeric units. The polymers can be seen as forming a complexed pair. Stereocomplex formation is known for several sets, typically pairs, of polymers, including sets of synthetic polymers. Typically, the stereocomplex has a crystalline form of which the melting temperature is higher than that of the individual polymers on which the stereocomplex is based.

In aspects of the invention, the stereocomplex is preferably formed by a pair of polymers in the polymer set, preferably by the first and second polymers, preferably by interaction of monomeric units of the first and second polymers, preferably by stoichiometric interaction involving noncovalent forces, including hydrogen bonding, stacking interaction, Van Der Waals interaction, Van der Waals forces, ionic interaction, dipole interactions, charge-charge interaction and/or electrostatic interactions, optionally stabilized by cations or anions,

In aspects of the invention, the formation of the stereocomplex, at least during preparation of the polymer product, may be the result of all, or, preferably, part of the first and second polymers in the resin composition forming one or more stereocomplexes. The stereocomplexes may be permanent, but may also be temporary. Preferably the stereocomplexes are permanent.

The polymer set is preferably selected from the group consisting of a set of lactic acid polymers, a set of propylene succinate polymers, a set of *t*-butylthiirane polymers, a set of methyl-α-chloro acrylate polymers, a set of γ-benzyl-glutamate polymers, a set of methyl methacrylate polymers, a set of poly(*st*-methyl methacrylate) and poly(*it*-butyl methacrylate), a set of α-methylbenzyl methacrylate polymers, set of *it*-polypropylene and *st-*polypropylene, and a set of α-ethyl-α-methyl-β-propiolactone polymers. For these sets, stereocomplex formation is known as is *i*.*a*. described in Joseph C. Salamone, Concise Polymeric Materials Encyclopedia, 1998 by CRC Press and in Elwin Schomaker, Thesis on The Process of Stereocomplexation between it- and st-PMMA, 1998.

For instance, stereocomplex formation of the set of poly(propylene succinate) is known for poly((S)-propylene succinate) and poly((R)-propylene succinate) (see Longo et al., J. Am. Chem. Soc. 136(2014), 15897-15900); stereocomplex formation of the set of α-ethyl-α-methylpropiolactone polymers is known for isotactic (*it*-) (R)-α-ethyl-α-methylpropiolactone and *it*-(S)-α-ethyl-α-methylpropiolactone; stereocomplex formation of the set of *t-*butylthiirane polymers is known for *it*-(R)-*t*-butylthiirane and *it-*(*S*)*-t-*butylthiirane; stereocomplex formation of the set of methyl-α-chloro acrylate polymers is known for *it*-poly(methyl-α-chloro acrylate) and syndiotactic (*st*-) poly(methyl-α-chloro acrylate); stereocomplex formation of the set of (γ-benzyl-glutamate) polymers is known for poly(γ-benzyl-D-glutamate) and poly(γ-benzyl-L-glutamate); stereocomplex formation of the set of methyl methacrylate polymers is known for *it*-poly(methyl methacrylate) and *st-*poly(methyl methacrylate); stereocomplex formation of the set of poly(methyl methacrylate) and poly(*i*-butyl methacrylate) is known for *it-*poly(methyl methacrylate) and *st*-poly(*i*-butyl methacrylate); stereocomplex formation of the set of polypropylene polymers is known for *it*-polypropylene and *st*-polypropylene; stereocomplex formation of the set of α-methylbenzyl methacrylate polymers is known for *it*-(R)-α-methylbenzyl methacrylate and *it*-(S)-α-methylbenzyl methacrylate; and stereocomplex formation for the set of lactic acid polymers is known for poly(L-lactic acid) and poly(D-lactic acid). These sets of polymers are accordingly preferred for the present invention.

The low and high Tₘ semicrystalline polymer phases may at least partially comprise the same polymers, in particular in the embodiments wherein the high Tₘ semicrystalline polymer phase comprises a set of polymers capable of forming a stereocomplex. For instance, in the embodiments wherein the high Tₘ semicrystalline polymer phase comprises a set of the first and second polymers, the low Tₘ semicrystalline polymer phase may comprise, preferably consist of, the first polymer as well. This means that the low Tₘ semicrystalline polymer phase may consist of the first polymer and that this first polymer is capable of forming a stereocomplex with a second polymer. Accordingly, the high Tₘ semicrystalline polymer phase comprises a combination of the first and the second polymers. In other words, the resin composition may comprise the first and second polymers as the sole polymers, the first polymer being in excess with the respect to the second polymer.

In a preferred aspect of the present invention, the low and high Tₘ semicrystalline polymer phase consist of poly(lactic acid) polymers. As such, the low and high Tₘ semicrystalline polymer phase are both based on L-lactic acid, D-lactic acid or a combination thereof.

In a particular preferred embodiment, the low Tₘ semicrystalline polymer phase comprises a poly(L-lactic acid) polymer that is mainly based on L-lactic acid and the high Tₘ semicrystalline polymer phase comprises a combination of said poly(L-lactic acid) polymer that is mainly based on L-lactic acid and a poly(D-lactic acid) polymer that is mainly based on D-lactic acid. As such, in this embodiment, the combination of said poly(L-lactic acid) and poly(D-lactic acid) are capable of forming a stereocomplex having a melting point of about 230 °C, while the said poly(L-lactic acid) has a melting point of about 150 to 180 °C (depending on the amount of D-lactic acid). Such combination of polymers in the resin result in a high melt strength at processing temperature such as foaming temperatures, which is advantageous for the process and the process or the particular foam obtainable by this process. Accordingly, the present invention is particularly directed to a poly(lactic acid)-based product, preferably a polymeric foam, based on a resin composition comprising a poly(L-lactic acid) (PLLA) polymer that is mainly based L-lactic acid, and a poly(D-lactic acid) (PDLA) polymer that is mainly based on D-lactic acid.

Without wishing to be bound by theory, the present inventors believe that the combination of said PLLA and said PDLA form a PLA stereocomplex (PLA SC) in the resin and that said stereocomplex results in overall improved rheological characteristics of the resin. The formation of stereocomplexes by PLLA/PDLA combinations as such is known (see for instance Ikada et al., Macromolecules, 1987, 20 (4), pp 904-906). PLA SC typically has a higher melting temperature than the individual PLA polymers on which the stereocomplexes are based. Typically the difference in the melting temperature can be 40 °C or more. The presence of stereocomplexes such as PLA SC in the resin of the present invention can be determined by analytical techniques such as differential scanning calorimetry (DSC).

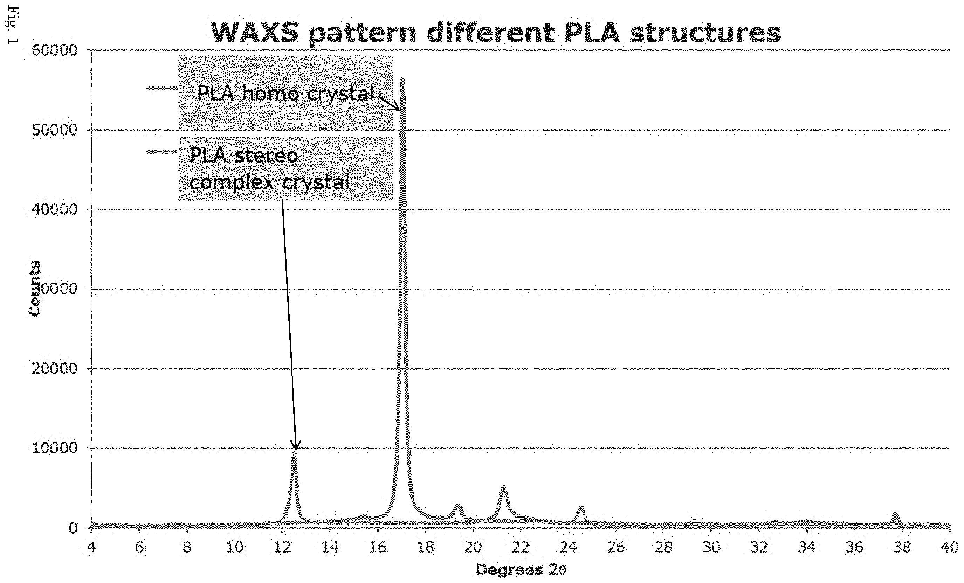

The combination of said lactic acid based polymers comprising PLLA and PDLA in the resin composition can thus result in that the resin composition comprises a stereocomplex such as PLA SC of said PLLA and PDLA. Differences between PLA homocrystals and PLA stereocomplex crystals can be distinguished by DSC and or X-ray (more specific WAXS; see figure 1) It was found that for the present invention, it is not required that the resin composition comprises an equal amount of the low Tₘ semicrystalline polymer phase and high Tₘ semicrystalline polymer phase. In general, it is sufficient if high Tₘ semicrystalline polymer phase is present in an amount of less than 30%, preferably in the range of 0.05 to 25%, more preferably in the range of 0.1 to 20%, based on the total weight of the resin composition. These amounts were found particularly applicable to PLLA and PDLA. Thus in a preferred embodiment, the resin composition comprises 0.05 to 10% PDLA and 80 to 95% PLLA, based on the total weight of the resin composition.

For the amount of the high Tₘ semicrystalline polymer phase are to be considered all polymers in the resin composition that are part of the phase having the higher melting point. Thus, in the embodiments wherein the low Tₘ semicrystalline polymer phase comprise or consist of the first polymer, while the high Tₘ semicrystalline polymer phase comprise a combination of the first and second polymers capable of forming a stereocomplex, the amount of high Tₘ semicrystalline polymer phase is regarded to comprise the combined amount of the first and second polymers that can form said stereocomplex, while the remainder of the first polymer is to be considered to be part of the total amount of the low Tₘ semicrystalline polymer phase. For instance, if the low Tₘ semicrystalline polymer phase consists of the first polymer, while the high Tₘ semicrystalline polymer phase consists of the first and second polymers which form a stereocomplex in a 1:1 ratio, the amount of high Tₘ semicrystalline polymer phase can also be regarded as twice the amount of second polymers, while the amount of low Tₘ semicrystalline polymer phase can be considered as the total amount of the first polymer minus the amount of the second polymer.

A particular advantage of the present invention is that the amount of the low Tₘ semicrystalline polymer phase polymer in the resin composition is typically in the range of 70% or higher, preferably 85% or higher, more preferably 90% or higher, based on the total weight of the resin composition. This means that the resin and the resulting product may consist essentially entirely of the low and high Tₘ semicrystalline polymer phases. As such the product can retain the favorable properties that are known for the low and high Tₘ semicrystalline polymer phases, *i.e*. the biodegradability and sustainability. It may be appreciated that one or more additives may be present (*e.g.* a nucleation agent, *vide infra*)*,* but it is preferred that these additives are of a natural source and/or biodegradable such that the product remains environmentally benign. Accordingly, with the resin and the polymeric product based thereon consisting essentially entirely of the low and high Tₘ semicrystalline polymer phases is meant that the combined amount of the low and high Tₘ semicrystalline polymer phases is at least 90 wt%, preferably at least 95%, more preferably at least 98 wt% of respectively the resin and the polymeric product based thereon.

The terms PLLA and PDLA as used herein are meant to include all types of poly(lactic acid) polymers that have crystalline character and a glass transition or melting temperature. PLLA and PDLA in accordance with the present invention may be based entirely on L- or D-lactic acid respectively. However, it was found for the present invention that this is not required. In accordance with the invention, PLLA may comprises small amounts of D-lactic acid with respect to L-lactic acid and/or PDLA may comprises small amounts of L-lactic acid with respect to D-lactic acid. Accordingly, PLLA is mainly based on L-lactic acid and PDLA is mainly based on D-lactic acid. Amorphous PLA that does not have a crystalline character is not considered PLLA or PDLA in accordance with the present invention.

In a preferred embodiment, the poly(L-lactic acid) polymer is based on less than 10 mol% D-lactic acid and essentially entirely complemented with L-lactic acid. In yet another preferred embodiment, the poly(D-lactic acid) polymer is based on less than 10 mol% L-lactic acid and essentially entirely complemented with D-lactic acid. In certain embodiments of the present invention, the PLLA and/or PDLA may be based on an initiator (*e.g.* a polyalcohol, *vide infra*) that is not PLLA and/or PDLA. Accordingly, with essentially entirely complemented is meant that the complementing monomers of PLLA and PDLA are based on L- or D-lactic acid respectively, while the core or initiator may be of a different origin.

Particularly good results in terms of melt strength and open-cell content were obtained in case the PDLA is a branched polymer (herein also referred to as branched PDLA). PLA polymers are generally linear polymers, but branched PLA polymers can be provided by using chain extenders or branching agents that result in cross-linking or branching of the PLA polymers. Alternatively, or additionally, branched PLA polymers can be obtained by using a multifunctional initiator for initiating the PLA polymerization reaction. In a particularly preferred embodiment, the PDLA is a multi-arm polymer (herein also referred to as multi-arm PDLA or star-shaped PDLA) of which each arm comprises a poly(D-lactic acid) segment that is mainly based on D-lactic acid - similar to the PDLA as such.

Multi-arm PDLA can be obtained by initiating the polymerization reaction with a multi-functional initiator. Examples of multi-functional initiators include polyalcohols such as glycerol, trimethylolpropane, pentaerythritol, dipentaerythritol, hexaglycerol and tripentaerythritol. The multi-arm PDLA thus accordingly may comprise a core that is based on an poly-alcohol such as glycerol, trimethylolpropane, pentaerythritol, dipentaerythritol, hexaglycerol and tripentaerythritol. By selecting the appropriate multi-functional initiator, the multi-arm polymer may comprise up to 25 arms. Preferably the multi-arm PDLA comprises 8 or less arms, more preferably 3 to 6 arms, such as 4 arms.

A particular advantage of the branched PDLA, and especially of the multi-arm PDLA is that these PDLA polymers in said PLA based formulations result in a particularly low open-cell content. It was found possible to provide the poly(lactic acid)-based foam with an open-cell content of less than 10%, even less than 5%.

As such, in general, branched or multi-arm properties of the polymers have a positive effect on the open-cell content of the foam. A particular embodiment of the present invention is therefore the foam, in particular the poly(lactic acid)-based foam, having an open-cell content of less than 80%, preferably less than 50%, more preferably less than 25%, most preferably less than 10% as determined by a method as described in DIN ISO 4590.

The present inventors have further surprisingly found that the weight-average molecular weight (absolute molecular weight determined with help of GPC and HexaFluoroIsoPropanol (HFIP) as solvent) of the PDLA is preferably less than 150 x 10³ g/mol, more preferably less than 130 x 10³ g/mol, even more preferably less than 100 x 10³ g/mol, most preferably less than 50 x 10³ g/mol, even more preferably less than 45 x 10³ g/mol. A low average molecular weight of the PDLA results in improved rheological properties and a low cell content of the foam. A combination of the multi-arm PDLA and the indicated average molecular weights have shown particular good results.

Foaming processes typically *i*.*a*. rely on the presence of a nucleation agent. Accordingly, the poly(lactic acid)-based foam in accordance with the present invention, preferably further comprises a nucleation agent. It is preferred that the nucleation agent, if present, is present in an amount of less than 10%, preferably less than 5% based on the total weight of the resin composition. Too much nucleation agent would diminish the favorable properties of the foam due to the very high cell density, while too less nucleation agent may result in poor mechanical properties. The nucleation agent may comprise an organic nucleation and/or an inorganic nucleating agent. Examples of preferred inorganic nucleation agents include a lamellar clay mineral such as talc.

The resin composition of the present invention may further comprise UV stabilizers, heat stabilizers, anti-oxidants, flame retardants, impact modifiers, plasticizers, rheology modifiers, antistatic agents, mold release agents, lubricants, colorants (pigments) or biodegradable and/or biobased thermoplastic blend components like poly-butylene-adipate-(co)-terephtalate (PBAT), poly-butylene-succinate (PBS) and its copolymers like poly-butylene-succinate-(co)-adipate (PBSA), poly-hydroxy-alkanoate (PHA), poly-caprolactone (PCL), Poly-vinyl acetate (PVAc), Poly-vinyl-alcohol (PVOH) and carbohydrate based components like (thermoplastic) starch and (thermoplastic) cellulose.

A further aspect of the present invention is a method for the production of the polymeric product, which method comprises processing the resin composition at a temperature between the melting point of the low Tₘ semicrystalline polymer phase and the melting point of the high Tₘ semicrystalline polymer phase to obtain the polymeric foam. The type of processing of the resin depend on the desired product. Typically, the processing comprises shaping the resin into the shape of the product. In general, the processing may comprise melt stretch processing such as film extrusion (e.g. film blowing, film casting), fiber spinning, blow molding, injection stretch blow molding, roto molding, 3D-printing techniques (additive manufacturing), particle foaming, thermoforming, or the like, and combinations thereof. Preferably the processing comprise foaming, since the present invention is particularly suitable for providing foams having a low open-cell content (*vide supra*)*.*

As described above, the degree of the crystallinity of the low Tₘ semicrystalline polymer phase may be very low, *e.g.* 2 to 3% or less such that the melting point of the low Tₘ semicrystalline polymer phase may be difficult to be determined or can not be determined. In the context of the production of the product as described above, the melting point can be considered as the processing temperature. The processing temperature of a semicrystalline polymer phase such as the low Tₘ semicrystalline polymer phase can be determined by using viscosity/shear rate relations. Viscosity/shear rate relations can be analyzed using a Rosand RH7 Dual Bore Advanced Capillary Extrusion Rheometer. Speeds of the piston can be set from 1mm/min to 150mm/min. When equipped with *e.g.* a capillary of 16x1 mm, viscosities in the shear rate range of 40 to 3000 s⁻¹ can be determined. Viscosity itself can be deduced by help of a pressure transducer placed just before the entrance of the capillary. Prior to the analysis, the machine has to be filled with about 50 grams of material, next the samples needs to be heated/melted at the measuring temperature for 6 minutes. After this the analysis can start. Preferably, the thermoplastic composition has a viscosity of at least 100, 1000, 10⁴ or even 10⁵, 10⁶ mPa.s and/or at most 10⁵, 10⁶, 10⁷ 10⁸ or 10⁹ mPa.s at processing temperatures.

Foaming such as extrusion foaming in general is known in the art, for instance from the aforementioned US2008/262118.

For the present invention, the method to provide the foam can be carried out by using a twin-screw extruder (both co-rotating and counter rotating versions are possible) with a die connected to the extruder. Preferably, a melt cooler and/or a melt mixer is/are located between the extruder and die. Alternatively, a single screw extruder with a die connected to the extruder can be used. Also for the single screw extruder, it is preferred that between extruder and die, the melt cooler and/or melt mixer is/are located. In yet another alternative setup, the present method to provide the foam can be carried out in a tandem extrusion setup wherein two extruders attached to each other. Alternative extruder setups may also be possible to carry out the present method.

In a preferred embodiment of the method to provide the foam, the foaming comprises extrusion foaming and the steps of:
1) heating said resin composition to a temperature at or above its lowest melting point, preferably to a temperature of 140 to 215 °C, more preferably 150 to 210 °C to provide a heated resin composition;
2) adding a blowing agent to the heated resin composition such that a foamable resin composition is provided; and
3) optionally adjusting the temperature of the foamable resin composition to a temperature of 90 to 160 °C, preferably 100 to 145 °C;
4) passing the foamable resin composition through an extrusion die and allowing said foamable resin composition to expand such that the poly(lactic acid)-based foam is obtained.

In the method of the present invention, the resin composition is heated to a temperature at or above the melting point of the low Tₘ semicrystalline polymer phase. In particular for PLA-based products as described herein, it was found to be preferable not to exceed a temperature of 215 °C, more preferable not to exceed 210 °C. Without wishing to be bound by theory, the inventors believe at a temperature of 215 °C or lower, the PLA SC remains intact which explains the improved melt strength as provided by the present invention. The temperature is preferably between 140 °C and 215 °C. At temperatures in this range, the heated resin composition has a similar appearance as molten PLA while maintaining some of the structure of crystalline PLA. This is believed to be the result of the presence of PLA SC. Particular good results were obtained at a temperature in the range of 150 to 210 °C.

After heating the resin composition to the indicated temperature to provide the heated resin, the blowing agent is added for the foaming. The blowing agent may comprise a physical blowing agent, preferably one or more physical blowing agents selected from the group consisting of nitrogen, carbon dioxide, fluorocarbons, hydrofluorocarbons, hydrocarbons such as isobutane and pentane, hydrochlorofluorocarbons, lower alkanols, alkyl chlorides and alkyl ethers. Alternatively, or additionally to the physical blowing agent, the blowing agent may comprise a chemical blowing agent, preferably one or more chemical blowing agents selected from the group consisting of nitrogen- or carbon-dioxide-generating agents such as sodium bicarbonates and mixtures thereof with citric acid.

Preferably, the blowing agent comprises carbon dioxide. Carbon dioxide can be added to the heated resin in any physical phase: solid, liquid, gaseous and/or supercritical. In a most preferred embodiment, the blowing agent comprises supercritical carbon dioxide. Using supercritical carbon dioxide is particularly advantageous. This blowing agent can be fed to the extruder as liquid, but changes into the supercritical state when it enters the extruder. After introduction, the supercritical liquid can be maintained under supercritical conditions (*i*.*e*. pressure and temperature conditions to prevent the supercritical liquid from a phase transition to gas) until the foamable resin composition passed through the die, resulting in a better mixing with the resin. Carbon dioxide is for instance a supercritical fluid at a temperature and pressure simultaneously at or above 31.1 °C and 72.9 bar. *Inter alia* for reasons of ease of operation and reliability, it is preferred that supercritical conditions are preferably maintained throughout the extrusion process, *i.e*. during steps 2-3 of the present method.

In the embodiments wherein the blowing agent comprises CO₂, the blowing agent is typically added in an amount of at least 1 wt%, preferably up to 12 wt%, more preferably up to 11 wt%, most preferably 4 to 10.5 wt%, based on the weight of the polymer composition.

Generally, the heated resin and the blowing agent added are mixed or blended in the melt mixer (the basic mixing process happens in the extruder; homogenizing the resin temperature is the main goal of the melt mixer) to obtain a homogeneous distribution of the blowing agent in the foamable resin composition. This can be carried out before or after the temperature adjustment in step 3 that is, optionally but typically carried out. It may be appreciated that mixing in the melt mixer may also be carried out without the temperature adjustment being carried out. It has been found that preferred foaming temperatures (*i*.*e*. temperatures at the die in step 4) are lower than the heating temperatures (*i*.*e*. the temperature of step 1). Accordingly, the temperature adjustment of step 3 is preferred. It is particularly preferred to adjust the temperature in step 3 to a temperature between 90 and 160 °C, more preferably between 100 and 145 °C to give the best foam properties, in particular of the PLA-based foams as described herein. The temperature adjustment can be carried out in the melt cooler that can be part of the extruder setup as described herein-above.

The present invention can be illustrated by the following nonlimiting examples.

### Example 1: preparation of three-, four- or six-armed PDLA

Various multi-armed PDLA polymers were prepared as described in S. Nouri, C. Dubois, and P.G. Lafleur, Polymer 67 (2015) 227-239.

Three different initiators were used:
- Trimethylolpropane, for three armed PDLA
- Pentaerythritol, for four armed PDLA
- Dipentaerythritol, for six armed PDLA
and with different molar ratios ((D)-lactide/initiator) to realize different arm lengths:
- 1.0 / 0.0090 for 'extra short' arms (XS)
- 1.0 / 0.0036 for short arms (S)
- 1.0 / 0.0018 for long arms (L)
Several PDLA polymers were accordingly obtained as indicated in Table 2.

The linear PDLA polymers D070 (Mw = 59 kg/mol; Mw/Mn = 1.7) and PDLA D120 (Mw = 86 kg/mol; Mw/Mn = 1.7) are commercially available and were obtained from Total Corbion.

**Table 1: PDLA polymers**

| PDLA code name | PDLA structure | Core (initiator) | Mw | Mw/Mn |
|---|---|---|---|---|
| 3S | 3-arm | Trimethylolpropane | 18 | 1.8 |
| 3L | 3-arm | Trimethylolpropane | 58 | 2.0 |
| 4XS | 4-arm | pentaerythritol | 7 | 1.6 |
| 4S | 4-arm | pentaerythritol | 43 | 1.4 |
| 4L | 4-arm | pentaerythritol | 56 | 2.0 |
| 6S | 6-arm | Dipentaerythritol | 29 | 1.9 |
| 6L | 6-arm | Dipentaerythritol | 69 | 1.9 |

### Example 2: preparation of PDLA masterbatch compositions

To add PDLA to the final foam composition it is for practical reasons preferred to have master batches consisting of PLLA and PDLA: a mixture of PLLA (a poly(L-lactic acid) polymer based on 95% L-lactide and 5% D-lactide having a molecular weight of 137 kg/mol named BF1505 and supplied by Synbra Technologies B.V., Etten-Leur, The Netherlands) was mixed with the various PDLA polymer materials (5 wt%) of Table 1. This mixture was extruded on a Berstorff ZE 25 CE * 40 D into a homogeneous strand at a melt temperature of about 190 °C and 300 rpm. After cooling the strand with help of a water bath, the strand was pelletized into cylindrical shaped pellets.

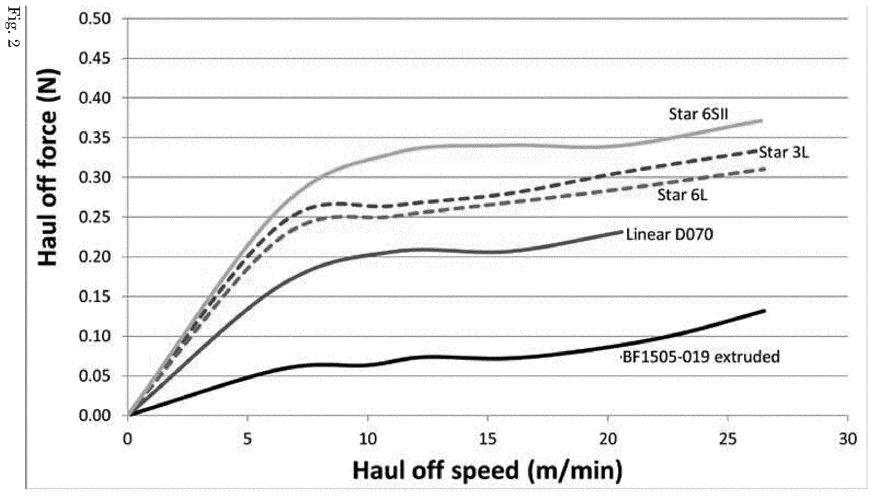

Pellets were analyzed with help of a Rosand twin bore capillary rheometer equipped with a haul off device for determination of the melt strength. An overview of the melt strength properties, analyzed at 160 °C, of some of the master batches can be found in figure 1. A clear positive effect of adding short chain branched PDLA structures to PLLA on melt strength can be seen from Figure 2.

### Example 3: extrusion foaming of resin compositions

Foaming experiments were performed on a Leistritz ZSE 27 maxx - 48 L/D twin-screw extruder setup (commercially available from Leistritz AG), equipped with a promix Z400 CO₂ dosing station, melt pump and a die with diameter of 2 mm. The resin compositions were based on a PLLA (a PLLA polymer based on 95.5% L-lactide and 4.5% D-lactide having a molecular weight of 148 kg/mol named BF2004 and supplied by Synbra Technologies B.V., Etten-Leur, The Netherlands), a talc masterbatch (Talc MB Na BIO L 6951 (30% filler content) and supplied by Polyone Corporation, Assesse, Belgium) and the master batches as described in Example 2. Dry blend mixtures as given in Table 2 were subjected to extrusion foaming using different amount of the blowing agent supercritical CO₂ (4, 6 or 8%, based on the weight of the resin composition) to provide poly(lactic acid)-based extrusion foams.

**Table 2: Resin compositions**

| Resin comp. number | BF 2004 (amount in weight%) | PDLA polymer (PDLA MB) (amount in weight%) | Talc (Talc MB) (amount in weight%) |
|---|---|---|---|
| 1 | 91.8% | 0.25% (5% PDLA D070 MB | 1% (3.2% talc MB) |
| 2 | 91.8% | 0.25% (5% PDLA 3L MB) | 1% (3.2% talc MB) |
| 3 | 91.8% | 0.25% (5% PDLA 6L MB) | 1% (3.2% talc MB) |
| 4 | 91.8% | 0.25% (5% PDLA 6S MB) | 1% (3.2% talc MB) |

Other processing conditions were:
- Temperatures extruder (hopper to die):
   cold/160/160/160/140/140/140/130/125/125/125/125/125 °C
- Temperatures melt pump: 125/125 °C
- Temperatures die: 125/125 °C
- Screw speed extruder: 60 rpm

The open-cell content of each foam was determined according to DIN ISO 4590.

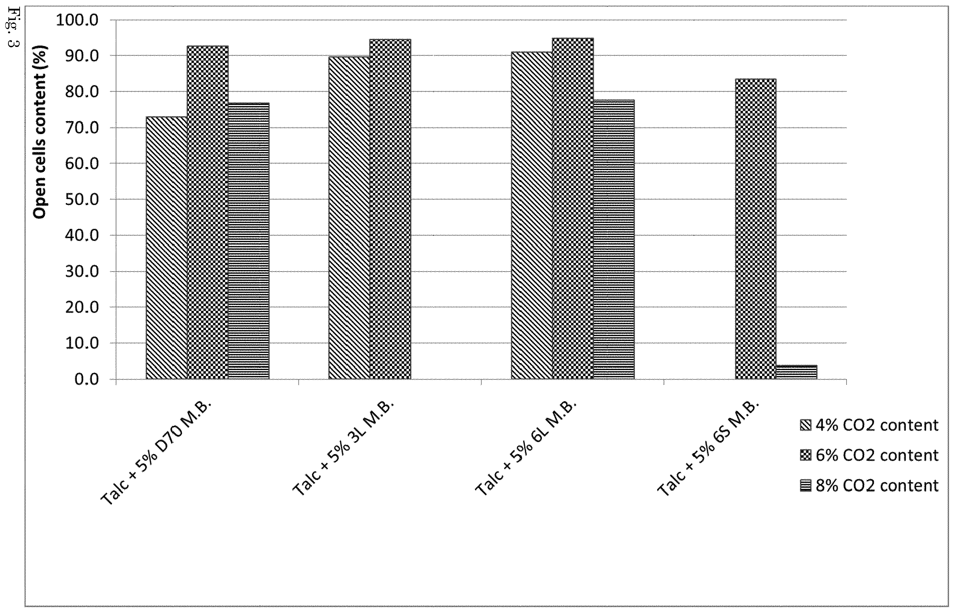

The results are provided in figure 3.

Typically, foam densities in the range of 20 to 100 g/L were obtained. Significant differences in open-cell content could be remarked when 8% of CO₂ is added to the foam formulation. With linear PDLA D070 and PDLA 6L high open-cell contents could be determined. When PDLA 6S is added to the foam formulation very low open-cell contents could be determined (< 10%).

## Claims

1. Polymeric product such as a foam, sheet, film, fibers, or the like, based on a resin composition that comprises a high melting point (Tₘ) semicrystalline polymer phase and a low melting point (Tₘ) semicrystalline polymer phase, wherein the high Tₘ and low Tₘ semicrystalline polymer phases comprise polymers based on the same monomers and/or isomers thereof, and wherein the high Tₘ semicrystalline polymer phase has a higher melting point than the melting point of the low Tₘ semicrystalline polymer phase.

2. Polymeric product in accordance with claim 1, which polymeric product is a polymeric foam, preferably a foam having an open-cell content of less than 80%, preferably less than 50 %, more preferably less than 25%, even more preferably less than 10% as determined by a method according to DIN ISO 4590.

3. Polymeric product in accordance with any of the previous claims, wherein the melting point of the high Tₘ semicrystalline polymer phase is more than 10 °C, preferably more than 25 °C, more preferably more than 40 °C higher than the melting point of the low Tₘ semicrystalline polymer phase polymers as determined by differential scanning calorimetry according to ISO 11357-3.

4. Polymeric product in accordance with any of the previous claims, wherein the high Tₘ semicrystalline polymer phase comprises a polymer set comprising a first polymer and a second polymer that are capable of forming a stereocomplex, preferably wherein the polymer set is selected from the group consisting of a set of lactic acid polymers, a set of propylene succinate polymers, a set of α-ethyl-α-methylpropiolactone polymers, a set of *t-*butylthiirane polymers, a set of methyl-α-chloro acrylate polymers, a set of γ-benzyl-glutamate polymers, a set of syndiotactic and isotactic methyl methacrylate polymers, a set of poly(*st*-methyl methacrylate) and poly(*it-*butyl methacrylate), a set of α-methylbenzyl methacrylate polymers, a set of syndiotactic and isotactic polypropylene, and a set of α-ethyl-α-methyl-β-propiolactone polymers, preferably a set of lactic acid polymers.

5. Polymeric product in accordance with any of the previous claims, wherein the high Tₘ semicrystalline polymer phase is present in an amount of less than 30 wt%, preferably in the range of 0.05 to 25 wt%, more preferably in the range of 0.1 to 20% based on the total weight of the resin composition and preferably, wherein the low Tₘ semicrystalline polymer phase is present in more than 70 wt%, more preferably more than 75 wt% based on the total weight of the resin composition.

6. Polymeric product in accordance with any of the previous claims, wherein the high Tₘ and low Tₘ semicrystalline polymer phases essentially consist of, poly(lactic acid) polymers, preferably wherein the low Tₘ semicrystalline polymer phase is a poly(L-lactic acid) polymer that is mainly based on L-lactic acid and the high Tₘ semicrystalline polymer phase comprise a combination of said poly(L-lactic acid) polymer that is mainly based on L-lactic acid and a poly(D-lactic acid) polymer that is mainly based on D-lactic acid, more preferably wherein the poly(L-lactic acid) polymer is based on less than 10 mol% D-lactic acid; and/or wherein the poly(D-lactic acid) polymer is based on less than 10 mol% L-lactic acid.

7. Polymeric product in accordance with claims 6, wherein the poly(D-lactic acid) polymer is a branched polymer, preferably a multi-arm polymer, more preferably a multi-arm polymer comprising 25 or less arms, preferably 8 or less arms, more preferably 3 to 6 arms, such as 4 arms.

8. Polymeric product in accordance with any of claims 6-7, wherein the poly(D-lactic acid) polymer is an multi-arm polymer comprising a core that is based on glycerol, trimethylolpropane, pentaerythritol, dipentaerythritol, hexaglycerol or tripentaerythritol.

9. Polymeric product in accordance with any of the claims 6-8, wherein the poly(D-lactic acid) polymer has an weight average molecular weight of less than 150 x 10³ g/mol, preferably less than 100 x 10³ g/mol, more preferably less than 50 x 10³ g/mol, even more preferable less than 45 x 10³ g/mol.

10. Polymeric product in accordance with any of the previous claims, wherein the resin composition further comprises a nucleation agent, preferably an organic nucleation and/or an inorganic nucleating agent, preferably a lamellar clay mineral, more preferably talc and wherein the nucleation agent is preferably present in an amount of less than 10%, preferably less than 5%, based on the total weight of the resin composition.

11. Method for the production of the product according to any of the previous claims, wherein said method comprises melt stretch processing the resin composition at a temperature between the melting point of the low Tₘ semicrystalline polymer phase and the melting point of the high Tₘ semicrystalline polymer phase.

12. Method in accordance with the previous claim, wherein said processing comprises foaming the resin composition.

13. Method in accordance with claim 12, wherein the foaming comprises extrusion foaming and the steps of:
1) heating said resin composition to a temperature at or above the melting point of the low Tₘ semicrystalline polymer phase, preferably to a temperature of 140 to 215 °C, more preferably 150 to 210 °C to provide a heated resin composition;
2) adding a blowing agent to the heated resin composition such that a foamable resin composition is provided; and
3) optionally adjusting the temperature of the foamable resin composition to a temperature of 90 to 160 °C, preferably 100 to 145 °C;
4) passing the foamable resin composition through an extrusion die and allowing said foamable resin composition to expand to obtain the foam.

14. Foam obtainable by the method in accordance with any of claims 12-13.

15. Article comprising the product in accordance with any of claims 1-10 or 14 as packaging and/or insulating material.
